# DEMANDE DE BREVET EUROPEEN

(11) **EP 2 918 823 A1**
(43) Date de publication de la demande: **16.09.2015**
(21) Numéro de dépôt: 14159459.8
(22) Date de dépôt: 13.03.2014
(51) Int. Cl.: F03D 3/00, F03G 7/10, F03D 3/04

(54) **Éolienne à vents artificiels**

(71) Demandeur: Porrini, Céline, 10110 Bar sur Seine (FR); Fleuriot, Yves, 10110 Bar sur Seine (FR)
(72) Inventeur: Porrini, Céline, 10110 Bar sur Seine (FR); Fleuriot, Yves, 10110 Bar sur Seine (FR)
(74) Mandataire: Rhein, Alain

(57) **Abrégé**

L'invention concerne une éolienne à vents artificiels (1) comportant :
- un plateau annulaire horizontal inférieur fixe (2);
- un plateau annulaire horizontal supérieur (3), mobile en rotation autour d'un axe vertical (4), surmontant le plateau fixe (2), positionné en vis-à-vis de ce plateau fixe (2), et agencé en sorte que son axe vertical de rotation (4) passe par le centre des deux plateaux annulaires horizontaux (2 ; 3);
- un interstice (5) entre le plateau fixe (2) et le plateau mobile (3);
- des moyens (6) pour propulser un flux d'air dans l'interstice (5) entre les plateaux (2 ; 3);
- des moyens (7) pour entraîner le plateau mobile (3) en rotation selon l'axe vertical de rotation (4), ceci sous l'effet du flux d'air ;
- au moins un générateur d'énergie électrique (13) comportant un stator (130) et un rotor (131), raccordé au plateau mobile (3), et entraîné en rotation par ce plateau mobile (3).

## Description

La présente invention a trait à une éolienne à vents artificiels.

Cette invention concerne le domaine de la fabrication des dispositifs conçus pour produire de l'énergie électrique à partir des vents.

L'on connaît, d'ores et déjà, de tels dispositifs qui se présentent sous la forme d'une éolienne. Une telle éolienne comporte un mat vertical ainsi qu'une hélice, montée à l'extrémité supérieure de ce mât, et comportant des pales s'étendant de manière sensiblement verticale. Cette éolienne comporte, également, un générateur d'énergie électrique comportant un stator ainsi qu'un rotor, susceptible d'adopter un mouvement de rotation par rapport au stator, et en prise avec ladite hélice.

En fait, les pales de l'éolienne sont entrainées par le vent naturel et entraînent en rotation le rotor du générateur ce qui a pour effet de produire de l'énergie électrique.

On observera qu'une telle éolienne est tributaire du vent naturel de sorte qu'en l'absence de vent naturel, cette éolienne ne produit pas d'énergie électrique. Or, le vent naturel est absent les trois quarts du temps de sorte qu'une telle éolienne ne produit de l'énergie électrique que pendant le quart du temps restant, soit environ 2200 heures par an.

La présente invention se veut de remédier aux inconvénients des éoliennes de l'état de la technique.

A cet effet, l'invention concerne une éolienne à vents artificiels, cette éolienne comportant :
- un plateau annulaire horizontal inférieur fixe ;
- un plateau annulaire horizontal supérieur, mobile en rotation autour d'un axe vertical, surmontant le plateau annulaire horizontal inférieur fixe, positionné en vis-à-vis de ce plateau annulaire horizontal inférieur fixe, et agencé en sorte que son axe vertical de rotation passe par le centre des deux plateaux annulaires horizontaux ;
- un interstice entre le plateau fixe et le plateau mobile ;
- des moyens pour propulser un flux d'air dans l'interstice entre le plateau fixe et le plateau mobile ;
- des moyens pour entraîner le plateau mobile en rotation selon l'axe vertical de rotation, ceci sous l'effet du flux d'air ;
- au moins un générateur d'énergie électrique comportant un stator et un rotor, raccordé au plateau mobile, et entraîné en rotation par ce plateau mobile.

Ainsi, l'éolienne selon l'invention comporte des moyens pour propulser un flux d'air entre les deux plateaux annulaires horizontaux ce qui a pour effet d'entraîner en rotation le plateau annulaire mobile qui, lui-même, entraîne en rotation le rotor du générateur d'énergie électrique ce qui a pour effet de produire de l'énergie électrique.

De manière avantageuse, l'éolienne selon l'invention produit de l'énergie électrique à partir de vents artificiels et en l'absence de vents naturels, ceci de sorte qu'une telle éolienne ne serait pas tributaire des vents naturels, notamment de l'absence de vents naturels, pour produire de l'énergie électrique et serait susceptible de fonctionner sans interruption.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

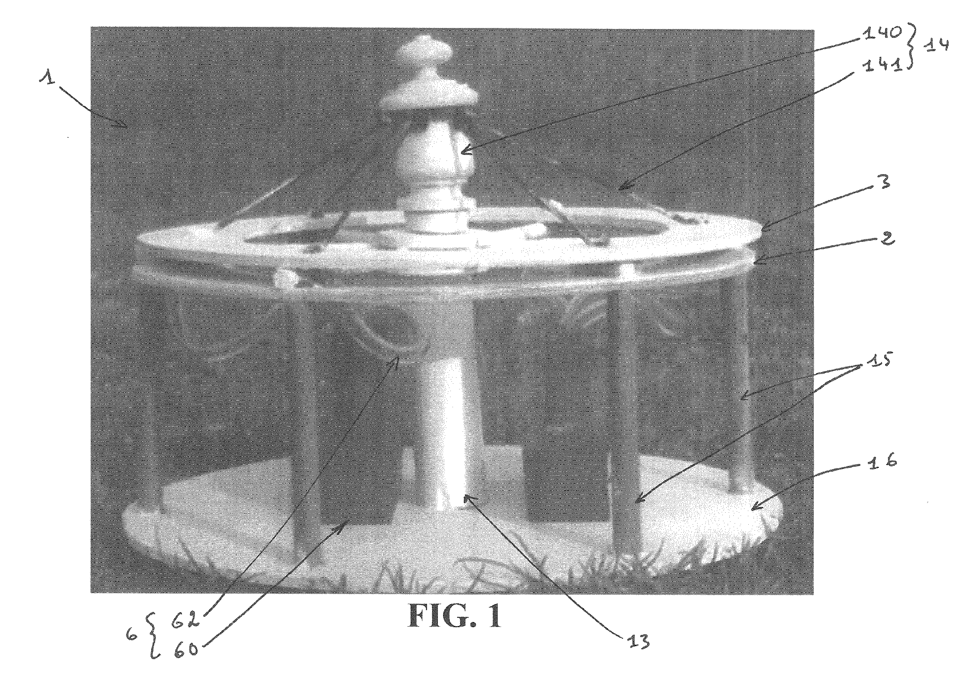

- la figure 1 est une vue schématisée et de face d'une éolienne conforme à l'invention ;

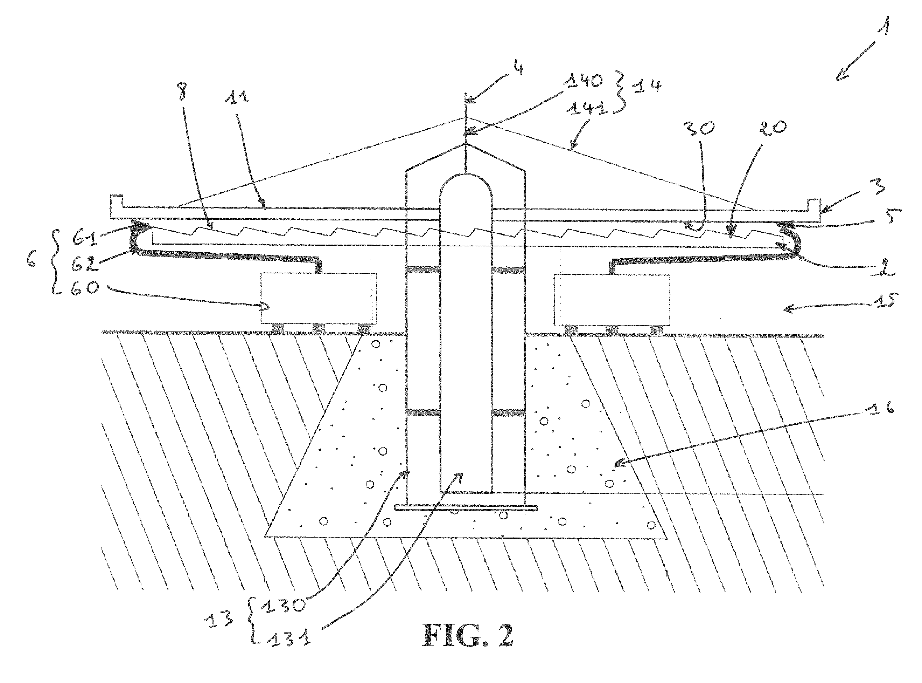

- la figure 2 est une vue schématisée et en coupe de l'éolienne illustrée figure 1 ;

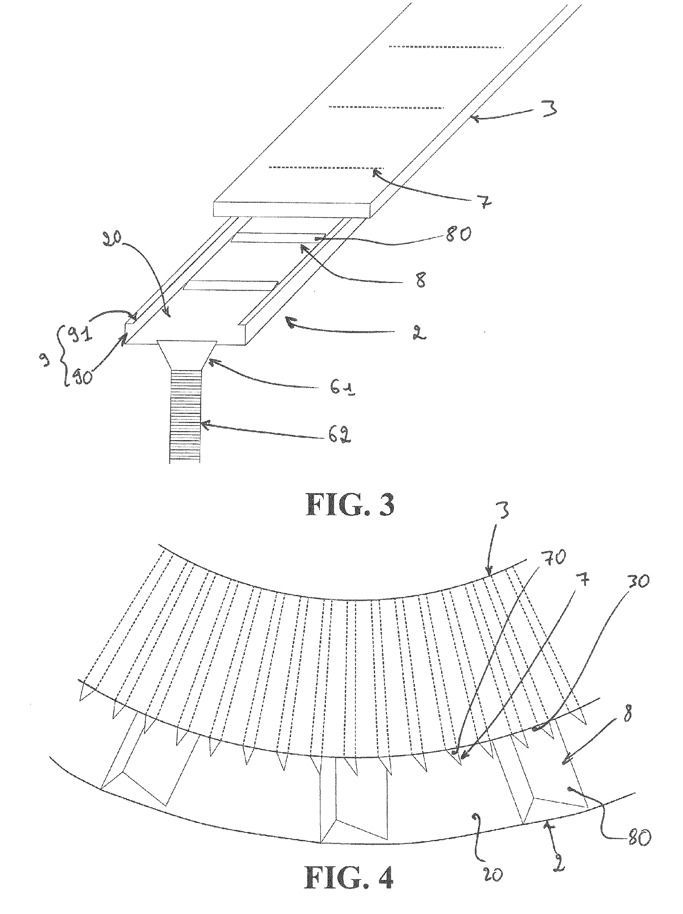

- la figure 3 est une vue schématisée et en coupe correspondant à un détail des plateaux fixe et mobile ;
- la figure 4 est une vue schématisée et en perspective correspondant à un détail des plateaux fixe et mobile ;

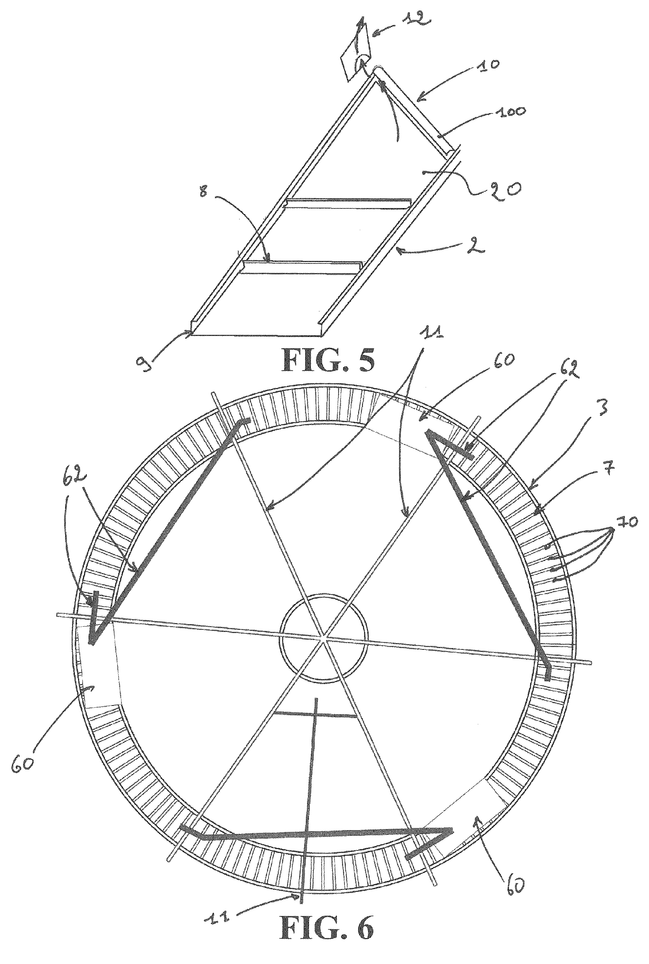

- la figure 5 est une vue schématisée et en perspective correspondant à un détail du plateau fixe ;
- la figure 6 est une vue schématisée et de dessus de l'éolienne selon l'invention.

La présente invention concerne le domaine de la fabrication des dispositifs conçus pour produire de l'énergie l'électrique à partir des vents.

Plus particulièrement, la présente invention a trait au domaine de la fabrication des dispositifs pour produire de l'énergie électrique à partir de vents artificiels.

L'invention concerne, alors, une éolienne 1 à vents artificiels.

Cette éolienne 1 comporte un plateau 2 annulaire horizontal inférieur fixe, dénommé plateau fixe 2 dans la suite de la description.

Cette éolienne 1 comporte, également, un plateau 3 annulaire horizontal supérieur, qui est mobile en rotation autour d'un axe vertical 4, et qui est dénommé plateau mobile 3 dans la suite de la description.

Le plateau fixe 2 et le plateau mobile 3 présentent, chacun, un centre tandis que l'éolienne 1 est agencée en sorte que l'axe vertical 4 de rotation du plateau mobile 3 passe par le centre des deux plateaux (fixe 2 et mobile 3).

Le plateau fixe 2 et/ou le plateau mobile 3 présentent une largeur comprise entre 1 et 3 mètres, de préférence de l'ordre de 2 mètres.

Le plateau fixe 2 et/ou le plateau mobile présentent un diamètre compris entre 20 et 40 mètres, de préférence de l'ordre de 30 mètres.

Ce plateau mobile 3 surmonte le plateau fixe 2, s'étend parallèlement à ce plateau fixe 2, et est positionné en vis-à-vis de ce plateau fixe 2.

En fait, ce plateau fixe 2 comporte une face supérieure 20, orientée en direction du plateau mobile 3, et présentant, de préférence, une surface plane.

En ce qui concerne le plateau mobile 3, celui-ci 3 comporte face inférieure 30, orientée en direction du plateau fixe 2, et présentant, de préférence, une surface plane.

L'éolienne 1 comporte, alors, un interstice 5 entre le plateau fixe 2 et le plateau mobile 3.

Cet interstice 5 peut, alors, être délimité par les faces supérieure 20 du plateau fixe 2 et inférieure 30 du plateau mobile 3.

Cette éolienne 1 comporte, également, des moyens 6 pour propulser un flux d'air dans l'interstice 5 entre le plateau fixe 2 et le plateau mobile 3.

En fait, de tels moyens 6 pour propulser un flux d'air comportent, d'une part, au moins un surpresseur 60 ou au moins une turbine, d'autre part, au moins une buse 61 débouchant dans l'interstice 5 entre les deux plateaux (fixe 2 et mobile 3) et, d'autre part encore, au moins un conduit 62 pour raccorder une telle buse 61 à un tel surpresseur 60 ou à une telle turbine.

Un mode préféré de réalisation consiste en ce que l'éolienne comporte 3 surpresseurs 60.

Un mode particulier de réalisation consiste en ce qu'un tel surpresseur est conçu pour propulser un air dont la vitesse est comprise entre 30 et 70m/s, de préférence de l'ordre de 50m/s.

Un mode préféré de réalisation consiste en ce qu'un tel surpresseur 60 est raccordé à deux conduits 60 qui sont, chacun, raccordés à une buse 61.

En fait, ces buses 61 sont réparties régulièrement (plus particulièrement de manière angulaire) par rapport aux plateaux (fixe 2 et mobile 3).

Selon une autre caractéristique, l'éolienne 1 comporte des moyens 7 pour entraîner le plateau mobile 3 en rotation selon l'axe vertical 4 de rotation, ceci sous l'effet du flux d'air.

En fait, ces moyens 7 pour entraîner adoptent la forme d'éléments 70 qui font saillie par rapport à la face inférieure 30 du plateau mobile 3 et/ou qui s'étendent à partir de cette face inférieure 30.

Un tel élément 70 qui fait saillie adopte, de préférence, la forme d'une lame.

Une autre caractéristique consiste en ce que ces éléments 70 qui font saillie s'étendent radialement par rapport au plateau mobile 3, plus particulièrement par rapport à (et à partir de) la face inférieure 30 du plateau mobile 3.

Finalement, ces éléments 70 qui font saillie définissent un chemin de rugosité.

Selon une autre caractéristique de l'invention, le plateau fixe 2 comporte des moyens 8 pour orienter le flux d'air au moins en direction du plateau mobile 3, plus particulièrement en direction des moyens 7 pour entraîner que comporte ce plateau mobile 3.

En fait, ces moyens 8 pour orienter comportent au moins un déflecteur 80 s'étendant, de manière radiale par rapport au plateau fixe 2, à partir de la face supérieure 20 de ce plateau fixe 2, et en direction du plateau mobile 3.

Un tel déflecteur 80 est, de préférence, de type incurvé.

Une caractéristique additionnelle de l'invention consiste en ce le plateau fixe 2 comporte des moyens 9 pour canaliser le flux d'air à l'intérieur de l'interstice 5.

En fait, ces moyens 9 pour canaliser comportent des ailes 90, s'étendant à partir de la face supérieure 20 du plateau fixe 2 et en direction du plateau mobile 3.

Un mode préféré de réalisation consiste en ce que ces ailes 90 s'étendent à partir de la face supérieure 20 du plateau fixe 2, ceci de manière perpendiculaire à la surface plane de cette face supérieure 20.

En fait et de préférence, ces ailes 90 bordent latéralement la face supérieure 20 du plateau fixe 2.

De manière additionnelle, ces moyens 9 pour canaliser peuvent, encore, comporter des retours 91 s'étendant à partir et dans le prolongement des ailes 90, ceci de manière parallèle à la surface plane de la face supérieure 20 du plateau fixe 2.

Encore une autre caractéristique consiste en ce que le plateau fixe 2 comporte des moyens 10 pour évacuer l'air hors de l'interstice 5.

A ce propos, on observera que ces moyens 10 pour évacuer comportent au moins un déflecteur 100 s'étendant à partir de la face supérieure 20 du plateau fixe 2 et en direction du plateau mobile 2.

Un tel déflecteur 100 présente une forme incurvée et/ou une section supérieure à un quart de cercle, de préférence en demi-cercle.

Un tel déflecteur 100 s'étend en faisant un angle aigu avec une direction radiale par rapport au plateau fixe 2.

Une autre caractéristique consiste en ce que le plateau mobile 3 comporte des pales 11 s'étendant de manière horizontale et radiale par rapport à ce plateau mobile 3, ceci par-dessus et/ou par-dessous ce plateau mobile 3.

En fait, une telle pale 11 adopte la forme d'une lame présentant deux faces qui s'étendent de manière verticale.

Encore une autre caractéristique consiste en ce que l'éolienne 1 comporte des moyens 12 pour diriger l'air sortant de l'interstice 5 (et, plus particulièrement, évacué par les moyens 10 pour évacuer mentionnés ci-dessus), ceci en direction d'au moins une pale 11.

Une caractéristique additionnelle concerne le fait que l'éolienne 1 comporte au moins un générateur 13 d'énergie électrique comportant un stator 130 et un rotor 131, raccordé au plateau mobile 3 par des moyens de raccordement 14, et entraîné en rotation par ce plateau mobile 3.

En ce qui concerne ces moyens de raccordement 14, ceux-ci comportent, d'une part, un arbre d'entraînement 140 en prise avec le rotor 131 et, d'autre part, des haubans 141 raccordant cet arbre d'entraînement 140 au plateau mobile 3.

De manière additionnelle, ladite éolienne 1 peut être complétée par des moyens (de préférence type électrique) pour mettre en mouvement le plateau mobile 3.

Ces moyens pour mettre en mouvement le plateau mobile 3 sont conçus pour initier le mouvement de ce plateau mobile 3 et pour démarrer l'éolienne 1.

Ladite éolienne 1 comporte, également, un châssis 15 sur lequel est monté le plateau fixe 2.

Finalement, l'éolienne 1 comporte une embase 16 ancrée dans le sol, notamment réalisée en béton armé, et recevant au moins une partie du générateur 13 d'énergie électrique.

## Revendications

1. Eolienne à vents artificiels (1), cette éolienne (1) comportant :
- un plateau annulaire horizontal inférieur fixe (2);
- un plateau annulaire horizontal supérieur (3), mobile en rotation autour d'un axe vertical (4), surmontant le plateau annulaire horizontal inférieur fixe (2), positionné en vis-à-vis de ce plateau annulaire horizontal inférieur fixe (2), et agencé en sorte que son axe vertical de rotation (4) passe par le centre des deux plateaux annulaires horizontaux (2 ; 3);
- un interstice (5) entre le plateau fixe (2) et le plateau mobile (3);
- des moyens (6) pour propulser un flux d'air dans l'interstice (5) entre le plateau fixe (2) et le plateau mobile (3) ;
- des moyens (7) pour entraîner le plateau mobile (3) en rotation selon l'axe vertical de rotation (4), ceci sous l'effet du flux d'air ;
- au moins un générateur d'énergie électrique (13) comportant un stator (130) et un rotor (131), raccordé au plateau mobile (3), et entraîné en rotation par ce plateau mobile (3).

2. Eolienne (1) selon la revendication 1, **caractérisé par le fait que** le plateau fixe (2) comporte des moyens (8) pour orienter le flux d'air au moins en direction du plateau mobile (3), plus particulièrement en direction des moyens (7) pour entraîner que comporte ce plateau mobile (3).

3. Eolienne (1) selon la revendication 2, **caractérisée par le fait que** le plateau fixe (2) comporte une face supérieure (20), orientée en direction du plateau mobile (3) tandis que les moyens (8) pour orienter comportent au moins un déflecteur (80) s'étendant, de manière radiale par rapport au plateau fixe (2), à partir de la face supérieure (20) de ce plateau fixe (2), et en direction du plateau mobile (3).

4. Eolienne (1) selon l'une quelconque des revendications précédentes, **caractérisée par le fait que** le plateau fixe (2) comporte des moyens (9) pour canaliser le flux d'air à l'intérieur de l'interstice (5).

5. Eolienne (1) selon la revendication 4, **caractérisée par le fait que** le plateau fixe (2) comporte une face supérieure (20), orientée en direction du plateau mobile (3) tandis que les moyens (9) pour canaliser comportent des ailes (90), s'étendant à partir de la face supérieure (20) du plateau fixe (2) et en direction du plateau mobile (3).

6. Eolienne (1) selon l'une quelconque des revendications précédentes, **caractérisée par le fait que** le plateau fixe (2) comporte des moyens (10) pour évacuer l'air hors de l'interstice (5).

7. Eolienne (1) selon l'une quelconque des revendications précédentes, **caractérisée par le fait que** le plateau mobile (3) comporte des pales (11) s'étendant de manière horizontale et radiale par rapport à ce plateau mobile (3), ceci par-dessus et/ou par-dessous le plateau mobile (3).

8. Eolienne (1) selon la revendication 7, **caractérisée par le fait qu'**elle comporte des moyens (12) pour diriger l'air sortant de l'interstice (5), ceci en direction d'au moins une pale (11).

9. Eolienne (1) selon l'une quelconque des revendications précédentes, **caractérisée par le fait que** les moyens (6) pour propulser un flux d'air comportent, d'une part, au moins un surpresseur (60) ou au moins une turbine, d'autre part, au moins une buse (61) débouchant dans l'interstice (5) entre les deux plateaux annulaires (2 ; 3) et, d'autre part encore, au moins un conduit (62) pour raccorder une telle buse (61) à un tel surpresseur (60) ou à une telle turbine.

10. Eolienne (1) selon l'une quelconque des revendications précédentes, **caractérisée par le fait que** le plateau mobile (3) comporte une face inférieure (30), orientée en direction du plateau fixe (2), et comportant les moyens (7) pour entraîner ce plateau mobile (3) sous l'effet du flux d'air, ces moyens (7) pour entraîner adoptent la forme d'éléments (70) qui font saillie par rapport à la face inférieure (30) du plateau mobile (3) et/ou qui s'étendent à partir de cette face inférieure (30).

11. Eolienne (1) selon l'une quelconque des revendications précédentes, **caractérisée par le fait qu'**elle comporte des moyens de type électrique pour mettre en mouvement le plateau mobile (3).
